# EUROPÄISCHE PATENTSCHRIFT

(11) **EP 1 190 002 B1**
(45) Veröffentlichungstag und Bekanntmachung des Hinweises auf die Patenterteilung: **02.06.2004**
(21) Anmeldenummer: 00938752.3
(22) Anmeldetag: 05.06.2000
(51) Int. Cl.: C09D 163/10, C09D 175/16, C09D 5/24

(54) **BESCHICHTUNGSVERFAHREN UND BESCHICHTUNGSGEMISCH**
COATING METHOD AND COATING MIXTURE
PROCEDE DE REVETEMENT ET MELANGE POUR REVETEMENT

(30) Priorität: 04.06.1999 DE 19925631
(43) Veröffentlichungstag der Anmeldung: 27.03.2002
(73) Patentinhaber: Gros, Georg, 77728 Oppenau (DE)
(72) Erfinder: Gros, Georg, 77728 Oppenau (DE)
(74) Vertreter: Uppena, Franz, Dr.
(86) Internationale Anmeldenummer: PCT/EP2000/005122
(87) Internationale Veröffentlichungsnummer: WO 2000/075250

(56) Entgegenhaltungen:
- EP-A- 0 081 323
- DE-A- 2 610 437
- GB-A- 2 040 977
- US-A- 5 976 419
- CHEMICAL ABSTRACTS, vol. 90, no. 22, 28. Mai 1972 (1972-05-28) Columbus, Ohio, US; abstract no. 170317j, SHIGEMATSU S. ET AL: "COATING OF ALUMINIUM" Seite 98; XP002148331 & JP 78 149235 A 26. Dezember 1972 (1972-12-26)

## Beschreibung

Die Erfindung betrifft ein Verfahren zum Aufbringen eines schweißbaren Korrosionsschutzüberzugs auf eine metallische Unterlage, insbesondere ein Karosserieblech für die Automobilindustrie, sowie ein Beschichtungsgemisch zur Durchführung dieses Verfahrens.

Schweißbare Schutzüberzüge der genannten Art auf Basis anorganischer Pigmentpartikel und organischer Polymerer sind bekannt und zum Beispiel in der DE-C 34 12 234 beschrieben.

In der EP-B 298 409 sind derartige Überzüge für Stahlblech beschrieben, die eine Schicht aus Kieselsäure und einer gehärteten organischen Matrix aufweisen, die durch thermische Vernetzung aus einem Epoxidharz und einem mehrwertigen Isocyanat erhalten worden ist.

In der EP-C 344 129 sind ähnliche Überzüge beschrieben, die durch Härten von Epoxidharzen mittels Aminen, Melaminen, Phenolharzen und dgl. erhalten werden.

In der EP-A 761 320 werden beschichtete Stahlbleche beschrieben, die eine organische Schutzschicht tragen, die durch elektrolytische Polymerisation von ionogenen polymerisierbaren organischen Verbindungen aus wäßriger Lösung erzeugt worden ist.

In der EP-A 659 855 wird ein wäßriges Überzugsgemisch beschrieben, aus dem härtbare Rostschutzüberzüge abgeschieden werden können.

Alle diese bekannten Überzugsgemische enthalten organische oder wäßrige Lösemittel, die nach dem Aufbringen verdampft werden müssen. Die Überzüge erfordern zur Erzielung einer dauerhaften Resistenz gegen Chemikalien und Witterungseinflüsse sowie eines ausreichenden Rostschutzes einer Härtung durch Erwärmen. Das hat den Nachteil eines höheren Energieverbrauchs und der Gefahr der Abgabe flüchtiger Bestandteile durch Verdampfen an die Umgebung. Auch neigen chemische vernetzte Polymerüberzüge häufig zum Verspröden.

Das bedeutet, daß die in bekannter Weise mit einem thermisch gehärteten organischen Überzug versehenen Stahlbleche nur in begrenztem Maße verformbar sind, zum Beispiel durch Tiefziehen oder Abkanten. Hierzu ist zumeist eine Vorbehandlung mit Ziehöl erforderlich. Die erforderlichen hohen Härtungstemperaturen können zu Gefügeveränderungen in der Unterlage führen.

Die bekannten Beschichtungsgemische enthalten häufig Zinkpulver. Derartige Gemische neigen zu Korrosion, die zwischen der pigmentierten Schicht und der metallischen, gegebenenfalls verzinkten Unterlage einsetzt. Andererseits ist zur Erzielung einer schweißbaren Beschichtung ein Gehalt an leitfähigen Bestandteilen erforderlich.

US 5,976,419 lehrt Beschichtungszusammensetzungen auf Basis von Harz, inhärentem leitfähigen Polymer und Partikeln von Metall bzw. mindestens einer Legierung.

GB 2 040 977 A beschreibt radikalisch polymerisierbare Beschichtungszusammensetzungen, die aufgrund eines Gehaltes an Silberpartikeln elektrisch leitfähig sind.

EP 0 081 323 A bezieht sich auf härtbare Tinten- bzw. Lackzusammensetzungen, bei denen elektrisch leitfähige Metallpartikel wie z.B. Silberpartikel in mindestens einem radikalisch polymerisierbaren Prepolymer enthalten sind.

Aufgabe der Erfindung war es, ein Beschichtungsgemisch und ein Beschichtungsverfahren für korrosionsempfindliche metallische Unterlagen bereitzustellen, die einen korrosions- und lösemittelbeständigen gleitfähigen schweißbaren Überzug liefern, der ohne Beschädigung zusammen mit der Unterlage verformt werden kann.

Die Erfindung geht aus von einem Gemisch zum Aufbringen einer Korrosionsschutzschicht auf eine metallische Unterlage, enthaltend ein festes polymeres organisches Bindemittel, eine niedermolekulare flüssige, radikalisch polymerisierbare Verbindung, eine bei Einwirkung von aktinischer Strahlung Radikale bildende Verbindung und ein leitfähiges anorganisches Pigment aus der Gruppe bestehend aus Oxiden, Phosphaten und Phosphiden von Eisen und Aluminium und Graphit-Glimmerpigmenten.

Erfindungsgemäß wird ferner ein Beschichtungsverfahren für eine metallische Unterlage vorgeschlagen, das dadurch gekennzeichnet ist, daß man das vorstehend erwähnte Gemisch auf die Oberfläche der Unterlage aufbringt und die aufgebrachte Beschichtung so lange mit aktinischer Strahlung solcher Intensität bestrahlt, daß eine feste, harte, zähe korrosionsbeständige Schicht gebildet wird.

Als aktinische Strahlung ist solche Strahlung zu verstehen, deren Energie zur Aktivierung des Polymerisationsinitiators ausreicht. Sie sollte normalerweise mindestens die Energie bzw. die Frequenz des sichtbaren Lichts haben; bevorzugt wird kurzwelliges sichtbares oder ultraviolettes Licht. Naturgemäß ist jede Strahlung kürzerer Wellenlänge, also höherer Energie, ebenfalls geeignet. So kann zum Beispiel auch Elektronenstrahlung eingesetzt werden, die den Vorteil hat, daß kein Photoinitiator erforderlich ist.

Das erfindungsgemäße Beschichtungsgemisch ist vorzugsweise frei von inerten flüchtigen Lösemitteln, insbesondere organischen Lösemitteln oder Wasser.

Das polymere Bindemittel ist fest und kann selbst gesättigt sein. Vorzugsweise enthält das polymere Bindemittel ungesättigte polymerisierbare Gruppen, die bei der strahlungsinitiierten Polymerisation der polymerisierbaren Verbindung mit dieser reagieren und ein unlösliches Netzwerk bilden können.

Geeignete Bindemittel sind Kondensationsharze, Epoxyharze, Poly(meth)acrylate, Polyurethane, Polyester, Polyether und andere ähnliche oder davon abgeleitete Polymere. Bevorzugte Bindemittel umfassen epoxydierte Novolake, Bisphenol-Epichlorhydrin-Kondensationsprodukte und Veresterungsprodukte der erwähnten Harze oder Polymeren mit Acryl- oder Methacrylsäure. Werden epoxydierte Novolake eingesetzt, so können diese auf Basis von Phenol, substituierten Phenolen (beispielsweise Kresol) oder auch mehrwertigen, gegebenenfalls substituierten Phenolen oder Gemischen der vorstehend erwähnten Phenole aufgebaut sein.

Die niedermolekulare monomere Verbindung enthält mindestens eine polymerisierbare ethylenisch ungesättigte Gruppe. Um eine möglichst gute Vernetzung und damit Unlöslichkeit und Resistenz der Schicht gegenüber Lösemitteln, Chemikalien und Witterungseinflüssen zu erzielen, sollte mindestens ein Teil der polymerisierbaren Verbindungen mindestens zwei polymerisierbare Gruppen enthalten. Vorzugsweise ist die polymerisierbare Verbindung ein Ester einer α,β-ungesättigten Carbonsäure mit einem zwei- oder mehrwertigen, gegebenenfalls auch oligomeren Alkohol. Besonders bevorzugt werden Ester der Acryl- oder Methacrylsäure. Die polymerisierbaren Verbindungen können außer Estergruppen noch andere funktionelle Gruppen, insbesondere Ether-, Amid- oder Urethangruppen enthalten. Beispiele für geeignete polymerisierbare Verbindungen umfassen Dipropylen- und Tripropylenglykoldi(meth)acrylat, 2-Acetoacetyloxyethylmethacrylat, Hexandioldiacrylat, Hydroxypropylmethacrylat, Hydroxyethylmethacrylat, Trimethylolpropantriacrylat.

Als Verbindungen, die unter Bestrahlung Radikale bilden, insbesondere Photoinitiatoren, sind vor allem solche geeignet, die eine starke Absorption im Spektralbereich der eingesetzten Strahlung, insbesondere des nahen ultravioletten oder kurzwelligen sichtbaren Lichts, also etwa im Wellenlängenbereich von 180 bis 700 nm, aufweisen. Geeignet sind vor allem aromatische Carbonylverbindungen und deren Derivate, wie Chinone, Ketone und deren Ketale, zum Beispiel Benzildimethylketal, Benzoin, substituierte Benzoine und Benzoinether, α-Aminoketone; ferner mehrkernige Heterocyclen, wie Acridine, Phenazine und deren Substitutionsprodukte sowie substituierte Phosphinoxide, zum Beispiel Bisacylphosphinoxide.

Um eine vorzeitige Polymerisation der Beschichtungsgemische zu verhindern, enthalten diese gewöhnlich kleine Mengen an Polymerisationsinhibitioren, zum Beispiel Hydrochinon und dessen Derivate und tert.-Butylphenole. Derartige Inhibitoren sind normalerweise bereits in allen käuflichen polymerisierbaren Verbindungen enthalten.

Die Gemische enthalten normalerweise ferner Beschichtungshilfsmittel, zum Beispiel oberflächenaktive Substanzen, insbesondere Polysiloxane, Silane und siliciumfreie oligomere oder polymere Tenside. Sie können ferner Haftvermittler, lösliche Korrosionsinhibitoren, Farbstoffe und Farbpigmente enthalten.

Ein weiterer wichtiger Bestandteil sind anorganische Pigmente, insbesondere Korrosions- oder Rostschutzpigmente, zum Beispiel Oxide, Phosphide oder Phosphate von Eisen oder Aluminium, und andere leitfähige Pigmente, zum Beispiel Graphit-Glimmerpigmente.

Die Mengenanteile der Bestandteile der Beschichtungsmischung liegen innerhalb der folgenden Bereiche:
Bindemittel: im allgemeinen 15 bis 60, bevorzugt 20 bis 50, insbesondere 20 bis 40 Gew.-%.
Polymerisierbare Verbindung: im allgemeinen 20 bis 60, bevorzugt 20 bis 55, insbesondere 25 bis 50 Gew.-%.
Pigment: im allgemeinen 10 bis 40; bevorzugt 10 bis 35, insbesondere 12 bis 35 Gew.-%.
Photoinitiator: im allgemeinen 5 bis 30, bevorzugt 8 bis 25, insbesondere 8 bis 20 Gew.-%.
Additive: im allgemeinen 0,1 bis 5, vorzugsweise 0,3 bis 4, besonders bevorzugt 0,4 bis 3 Gew.-%.

Die Beschichtungsgemische werden im allgemeinen durch Vermahlen der unlöslichen Pigmentpartikel mit den übrigen, löslichen Bestandteilen zu einer homogenen viskosen Masse hergestellt. Die Viskosität sollte in einem Bereich liegen, der ein gleichmäßiges Aufbringen zu einer dünnen, etwa 2 bis 8 µm dicken Schicht erlaubt. Die Viskosität kann durch Wahl der Art und Menge vor allem des Bindemittels und der polymerisierbaren Verbindung eingestellt werden. Sie liegt im allgemeinen im Bereich von 1000 bis 10000 mPas.

Die zu beschichtende metallische Unterlage ist bevorzugt ein Band oder ein Blech, das zumeist aus Stahl besteht und eine Dicke im Bereich von etwa 0,2 bis 1,6 mm hat. Die Bandoberfläche wird normalerweise elektrolytisch oder feuerverzinkt und bzw. oder chromatiert, oder einer ähnlichen Vorbehandlung unterworfen. Auf die derart vorbehandelte Oberfläche wird dann die schweißbare Beschichtung gemäß der Erfindung aufgebracht. Generell ist das Band oder Blech auf Rollen, sogenannte Coils, abgewickelt. Zum Aufbringen der erfindungsgemäßen Beschichtung wird das Coil abgewickelt, nach erfolgter Beschichtung dann wieder aufgewickelt. Das Aufbringen erfolgt zweckmäßig im kontinuierlichen Verfahren. Dabei durchläuft das Band eine Beschichtungs- und danach eine Härtungsstation. Die Beschichtung kann durch Besprühen, durch Schlitzdüsen oder durch Walzen erfolgen. Die Walzenbeschichtung wird im allgemeinen bevorzugt. Die Beschichtung erfolgt vorzugsweise bei Raumtemperatur oder bei leicht darüberliegender Temperatur, d. h. bei Temperaturen im Bereich von etwa 20 bis 40°C, wobei das Material und das Substrat vorzugsweise eine Temperatur von 40 bis 50°C aufweisen. Die Schichtdicke kann im allgemeinen 2 bis 8, vorzugsweise 3 bis 7 µm betragen. Da die Beschichtungsmasse vorzugsweise lösemittelfrei ist, entspricht dies auch im wesentlichen der Schichtdicke der gehärteten Schicht.

Nach der Beschichtung erfolgt die Härtung, vorteilhaft im Durchlauf durch eine Härtungsstation. Dort wird das Band in einer Inertgasatmosphäre, zum Beispiel unter Stickstoff, und in einem Abstand von wenigen Zentimetern unter einer Strahlungsquelle hindurchgeführt, die der gesamten Breite des Bands entspricht. Die Bandgeschwindigkeit ist abhängig von Schichtdicke, Lichtempfindlichkeit der Schicht, Lampenabstand und Lampenleistung. Sie ist weiter davon abhängig ob die Bestrahlung in Luft oder aber in Stickstoff erfolgt. Sie kann nach Wunsch durch Anbringen von zwei oder mehreren hintereinanderliegenden Strahlungsquellen beschleunigt werden. Als Strahlungsquellen werden bevorzugt UV-Lichtquellen. wie Gasentladungslampen, Xenonlampen oder Natriumdampflampen eingesetzt, die Emissionsmaxima im Spektralbereich von etwa 100 bis 700, insbesondere im Bereich von 200 bis 600 nm aufweisen. Auch Lampen, die im wesentlichen im kurzwelligen sichtbaren Bereich von etwa 400 bis 550 nm emittieren, können eingesetzt werden. Grundsätzlich kann auch Strahlung höherer Energie, zum Beispiel Elektronenstrahlung, zur Härtung eingesetzt werden. Die Bestrahlung erfolgt, ebenso wie die Beschichtung, bei Umgebungstemperaturen, die nicht wesentlich oberhalb Raumtemperatur, also im allgemeinen nicht oberhalb etwa 50°C liegen. Die bestrahlte Schichtoberfläche erreicht dabei Temperaturen bis zu etwa 80°C. Wenn eine zusätzliche Nachhärtung gewünscht wird, kann dies durch anschließendes kurzzeitiges Führen durch einen Trockenofen, der eine Temperatur bis zu etwa 250° hat, erfolgen, wobei die Oberflächentemperatur des Bands bei einer Verweilzeit von 30 Sekunden etwa 150 bis 160°C erreichen kann. Auf diese Weise kann die Korrosionsfestigkeit noch erhöht werden; eine derartige Nachhärtung ist jedoch im allgemeinen nicht erforderlich.

Die Schichtzusammensetzung und die Härtungsbedingungen sind in jedem Fall so zu wählen, daß eine harte, feste, korrosionsresistente Schicht erhalten wird, die aber ausreichend zäh ist, so daß eine Verformung der Unterlage, zum Beispiel des Stahlblechs, ohne Sprödungsrisse in der Korrosionsschutzschicht gewährleistet ist.

Die Verarbeitung der Korrosionsschutzschicht nach dem erfindungsgemäßen Verfahren ermöglicht eine breite Variation der Schichtdicke innerhalb des oben angegebenen Bereichs. Die Schicht haftet fest und dauerhaft auf der Unterlage; sie kann in üblicher Weise, zum Beispiel durch kationische Tauchlackierung, überlackiert werden und weist eine glatte, gleitfähige Oberfläche auf. Bei einer Dicke der gehärteten Schicht von 3 µm werden bis zu 900 Schweißpunkte je Elektrode erreicht.

Bei dem Hauptanwendungsgebiet des erfindungsgemäßen Verfahrens, der Herstellung und Verarbeitung von Karosserieblechen für den Automobilbau, erfolgt die erfindungsgemäße Beschichtung der Bleche (Coils) vorteilhaft bei dem Blechhersteller nach der Vorbehandlung. Die Bleche sind dann korrosionsgeschützt ("coil-coated steel") und können in diesem Stadium zum Weiterverarbeiter, in der Regel dem Automobilhersteller, transportiert und gelagert werden. Sie werden dort in gewünschter Weise verformt und einer üblichen Tauchlackierung als Grundierung unterworfen. Auf diese Grundierung wird dann später ein Decklack aufgebracht. In der Regel kann die Grundierung nicht an alle Stellen des verformten Stahlblechs gelangen. Hier bleibt die Oberfläche durch die erfindungsgemäße Beschichtung trotz Verformen und Schweißen noch immer korrosionsgeschützt.

Die folgenden Beispiele erläutern bevorzugte Ausführungsformen des erfindungsgemäßen Verfahrens. Mengenangaben und Mengenverhältnisse sind dabei - wenn nichts anderes angegeben ist - in Gewichtseinheiten zu verstehen. Die Mengen werden gewöhnlich in Gewichtsteilen (GT) angegeben.

### Beispiel 1

Ein Gemisch aus

| | |
|---|---|
| 20 GT | eines mit Acrylsäure veresterten Novolak-Epoxyharzes (Viaktin® VTE 6152, 65 % in Tripropylenglykoldiacrylat, Vianova Resins), |
| | |
| 15 GT | eines aliphatischen Urethanacrylats (Syntholux® DRB 227, 65 %ig in Hydroxypropylmethacrylat, Synthopol-Chemie), |
| | |
| 26,7 GT | Acetoacetyloxyethyl-methacrylat (Lonzamon® AAEMA, Lonza AG, Basel), |
| | |
| 8 GT | magnetisierbares Eisenoxid (Magnetschwarz® S 0045, BASF AG), |
| | |
| 12 GT | Eisenphosphid (Ferrophos® HRS 2132, Occidental Chemical Corp., Niagara, USA), |
| | |
| 3 GT | Aluminiumtriphosphat (K-White 105, Teikoku Kako Co., Osaka), |
| | |
| 6 GT | Benzildimethylketal (Irgacure® 651, Ciba-Geigy AG) |
| | |
| 1 GT | Irgacure® 1850 (Ciba-Geigy), Gemisch aus 50 % 1-Hydroxy-cyclohexyl-phenylketon und 50 % Bis(2,6-dimethoxybenzoyl-2,4,4-trimethylpentyl-phosphinoxid), |
| | |
| 8 GT | 1-Hydroxy-cyclohexylphenylketon (Irgacure® 184) und |
| | |
| 0,3 GT | substituiertes Phosphinoxid (Irgacure® 819) |

wurde auf einer Walzenmühle zwei Stunden gründlich vermahlen, bis eine homogene viskose Mischung entstanden war. Die Viskosität betrug 100 s Auslaufzeit aus einem Auslaufbecher gemäß Europäischer Norm EN ISO 2431 (CEN).Die Mischung wurde in einer Walzenbeschichtungsvorrichtung bei einer Durchlaufgeschwindigkeit von 20 m/min auf ein 20 cm breites entfettetes und getrocknetes Blech aus elektrolytisch verzinktem und chromatiertem Stahl von 0,8 mm Dicke so aufgebracht, daß eine 3 µm starke Beschichtung (4 g/m²) erhalten wurde. Das Blech wurde unmittelbar anschließend durch eine Härtungszone geführt, wo es im Abstand von 8 cm mit zwei hintereinanderliegenden UV-Gasentladungslampen der Firma IST, Typ CK-1 (galliumdotiert) und CK (quecksilberdotiert) mit einer Leistung von je 160 W/cm und Emissionsmaxima im Bereich von 200 bis 600 nm unter einer Stickstoffatmosphäre mit 3000 ppm Restsauerstoff bestrahlt wurde, wobei die Oberflächentemperatur der Beschichtung maximal 80°C erreichte. Die gehärtete Beschichtung war resistent gegen Butanon; das beschichtete Blech zeigte beim Abkanten um einen Winkel von 90° keinerlei Anzeichen für Beschädigungen oder Risse in der Korrosionsschutzschicht. Die Schichtoberfläche war glatt und gleitfähig. Sie war auch nach 360 Stunden Salzsprühtest nach DIN 50021 noch unbeschädigt und zeigte keine Anzeichen von Rotrost.

### Beispiel 2

Wie in Beispiel 1 beschrieben, wurde eine gehärtete Rostschutzschicht auf einem verzinkten und chromatierten Stahlblech hergestellt. Die Beschichtungsmasse enthielt die folgenden Bestandteile:

| | |
|---|---|
| 16 GT | des in Beispiel 1 angegebenen aliphatischen Urethanacrylats (Syntholux®), |
| | |
| 16 GT | eines aliphatischen Urethanacrylats (Viaktin® VTE 6171, 60 % in einem cycloaliphatischen Etheracrylat, Servocure® RM-174), |
| | |
| 1,5 GT | ungesättigter Phosphorsäureester (Ebecryl® 168, UCB Chemicals, Belgien); |
| | |
| 0,75 GT | eines Trimethoxysilanderivats (Addid® 900, Wacker-Chemie), |
| | |
| 2 GT | Korrosionsinhibitor (Irgacor® 153, Ciba-Geigy), |
| | |
| 37,75 GT | Lonzamon® AAEMA, |
| | |
| 15 GT | Eisenphosphid wie in Beispiel 1, |
| | |
| 5,5 GT | Irgacure® 1850 und |
| | |
| 5,5 GT | Irgacure® 184. |

Nach Beschichten und Härten wie in Beispiel 1 wurde ein korrosionsgeschütztes Stahlblech mit ähnlichen Eigenschaften wie dort erhalten.

### Beispiel 3

Es wurde wie in Beispiel 1 gearbeitet, wobei aber eine Beschichtungsmasse der folgenden Zusammensetzung eingesetzt wurde:

| | |
|---|---|
| 20 GT | eines Acrylsäureesters eines aromatischen Epoxyharzes (Laromer® LR 8986, BASF AG), |
| | |
| 20 GT | des in Beispiel 2 angegebenen aliphatischen Urethanacrylats (Viaktin® VTE 6171), |
| | |
| 0,5 GT | eines polyethermodifizierten Polydimethylsiloxans (Byk® 333, Byk Chemicals), |
| | |
| 0,1 GT | eines Polysiloxans (Dow Corning 163 Additiv, Dow Corning Corp., USA), |
| | |
| 20,6 GT | Lonzamon® AAEMA, |
| | |
| 10 GT | Magnetschwarz® S 0045 |
| | |
| 15 GT | Ferrophos® HRS 2132, |
| | |
| 3,8 GT | K-White® 105, |
| | |
| 2 GT | Irgacure® 1850 und |
| | |
| 8 GT | Irgacure® 184. |

Die Beschichtung hatte eine Dicke von 4 µm. Die Bestrahlung erfolgte an der Luft mit der gleichen Lichtquelle in Beispiel 1. Die Durchlaufgeschwindigkeit betrug 4 m/min. Es wurden im wesentlichen die gleichen Ergebnisse erzielt wie in Beispiel 1.

### Beispiel 4

Es wurde wie in Beispiel 1 gearbeitet, wobei aber das Beschichtungsgemisch durch die folgende Mischung ersetzt wurde:

| | |
|---|---|
| 22 GT | eines mit Acrylsäure veresterten aromatischen Epoxyharzes (Viaktin® EP 86, 75 % in Tripropylenglykoldiacrylat, Vianova), |
| | |
| 10 GT | Viaktin® VTE 6171, wie in Beispiel 2, |
| | |
| 0,5 GT | Byk® 333, |
| | |
| 0,05 GT | eines silikonfreien oberflächenaktiven Polymeren (Byk® 053), |
| | |
| 27,45 GT | Lonzamon® AAEMA, |
| | |
| 8 GT | Magnetschwarz® S 0045, |
| | |
| 12 GT | Ferrophos® HRS 2132 |
| | |
| 3 GT | K-White 105, |
| | |
| 1 GT | Irgacure® 1850 und |
| | |
| 16 GT | Irgacure® 184. |

Die Ergebnisse waren ähnlich wie in den vorhergehenden Beispielen.

### Beispiel 5

Es wurde wie in Beispiel 1 gearbeitet, jedoch wurde die Beschichtung mit der folgenden Mischung vorgenommen:

| | |
|---|---|
| 17 GT | Laromer® LR 8986, |
| | |
| 17 GT | Viaktin® VTE 6171, |
| | |
| 0,5 GT | Byk® 333, |
| | |
| 0,1 GT | Dow Corning 163 Additiv, |
| | |
| 22,9 GT | Lonzamon® AAEMA, |
| | |
| 8 GT | Magnetschwarz® S 0045, |
| | |
| 17 GT | Ferrophos® HRS 2132, |
| | |
| 3,5 GT | K-White 105, |
| | |
| 2 GT | Irgacure® 1850 und |
| | |
| 12 GT | Irgacure® 184. |

Es wurden vergleichbare Ergebnisse wie in Beispiel 1 erhalten.

### Beispiel 6

Es wurde wie in Beispiel 1 gearbeitet, jedoch wurde die Beschichtung mit der folgenden Mischung vorgenommen:

| | |
|---|---|
| 19 GT | eines mit Acrylsäure vernetzten Novolak-Epoxyharzes |
| | (Ebecryl® 639 der UCB Chemicals, Belgien, enthaltend 60% Epoxyharz, 30% Trimethylolpropantriacrylat und 10% Hydroxyethylmethacrylat, |
| | |
| 8 GT | eines aliphatischen Urethanacrylats (Ebecryl® IRR 351, UCB Chemicals), |
| | |
| 5,5 GT | Syntholux® DRB 227 |
| | |
| 3 GT | eines ungesättigten Phosphorsäureesters (Additol® VXL 6219, Vianova Resins) |
| | |
| 0,5 GT | Byk® 333 |
| | |
| 0,02 GT | Dow Corning 163 |
| | |
| 0,4 GT | Irgacure® 153 |
| | |
| 8,5 GT | Magnetschwarz® S 0045 |
| | |
| 13,5 GT | Ferrophos® HRS 2132 |
| | |
| 3,5 GT | K-White 105 |
| | |
| 13 GT | Irgacure® 184 |
| | |
| 3,25 GT | Irgacure® 651 |
| | |
| 1 GT | Irgacure® 1850 |
| | |
| 20,83 GT | eines Hydroxypropylmethacrylats (Bisomer® HPMA, BP Chemicals, Buckingham, GB) |

Es wurden vergleichbare Ergebnisse wie in Beispiel 1 erhalten.

## Patentansprüche

1. Beschichtungsgemisch mit Korrosionsschutzeigenschaften, enthaltend ein festes polymeres organisches Bindemittel, eine niedermolekulare flüssige, radikalisch polymerisierbare Verbindung, eine bei Einwirkung von aktinischer Strahlung Radikale bildende Verbindung und ein leitfähiges anorganisches Pigment, aus der Gruppe bestehend aus Oxiden, Phosphaten und Phosphiden von Eisen und Aluminium und Graphit-Glimmerpigmenten.

2. Gemisch nach Anspruch 1, **dadurch gekennzeichnet, dass** das leitfähige anorganische Pigment Eisenphosphid oder eine Kombination von magnetisierbarem Eisenoxid mit Eisenphosphid ist.

3. Gemisch nach Anspruch 1 oder 2, **dadurch gekennzeichnet, dass** das Bindemittel zu 15 bis 60, vorzugsweise 20 bis 50, insbesondere 20 bis 40 Gew.-%,
die polymerisierbare Verbindung zu 24 bis 60, vorzugsweise 20 bis 55, insbesondere 25 bis 50 Gew.-%,
das Pigment zu 10 bis 40, vorzugsweise 10 bis 35, insbesondere 12 bis 35 Gew.-%,
und der Photoinitiator zu 5 bis 30, vorzugsweise 8 bis 25, insbesondere 8 bis 20 Gew.-%, sowie
weitere Additive zu 0,1 bis 5, vorzugsweise 0,3 bis 4, besonders bevorzugt 0,4 bis 3 Gew.-% vorhanden sind.

4. Gemisch nach einem der Ansprüche 1 bis 3, **dadurch gekennzeichnet, dass** es frei von organischen Lösemitteln und Wasser ist.

5. Gemisch nach einem der Ansprüche 1 bis 4, **dadurch gekennzeichnet, dass** das Bindemittel selbst noch ungesättigte polymerisierbare Gruppen enthält.

6. Gemisch nach einem der Ansprüche 1 bis 5, **dadurch gekennzeichnet, daß** das Bindemittel ausgewählt ist aus der Gruppe bestehend aus Kondensationsharzen, Epoxyharzen, Poly(meth)acrylaten, Polyurethanen, Polyestern und Polyethem, vorzugsweise epoxydierten Novolaken, Bisphenol-Epichlorhydrin-Kondensationsprodukten und Veresterungsprodukten dieser Harze oder Polymeren mit (Meth)acrylsäure.

7. Gemisch nach einem der Ansprüche 1 bis 6, **dadurch gekennzeichnet, daß** die radikalisch polymerisierbare Verbindung ein Gemisch von Verbindungen ist, von denen mindestens ein Teil mehr als eine polymerisierbare Gruppe im Molekül enthält, oder vollständig aus diesen besteht.

8. Gemisch nach Anspruch 7, **dadurch gekennzeichnet, daß** die radikalisch polymerisierbare Verbindung ein Ester einer α-, β-ungesättigten Carbonsäure, vorzugsweise Acryl- oder Methacrylsäure, mit einem zwei- oder mehrwertigen monomeren oder oligomeren Alkohol ist.

9. Gemisch nach Anspruch 8, **dadurch gekennzeichnet, daß** die radikalisch polymerisierbare Verbindung ausgewählt ist aus der Gruppe bestehend aus Dipropylen- und Tripropylenglykoldi(meth)acrylat, 2-Acetoacetyloxyethylmethacrylat, Hexandioldiacrylat, Hydroxypropylmethacrylat, Hydroxyethylmethacrylat und Trimethylolpropantriacrylat

10. Gemisch nach einem der Ansprüche 1 bis 9, **dadurch gekennzeichnet, daß** die bei Bestrahlung Radikale bildende Verbindung eine aromatische Keto-Verbindung ist.

11. Verfahren zum Aufbringen einer gleitfähigen Korrosionsschutzschicht auf eine metallische Unterlage, **dadurch gekennzeichnet, daß** man ein Gemisch nach einem der Ansprüche 1 bis 10 auf die Oberfläche einer metallischen Unterlage aufbringt und die aufgebrachte Beschichtung so lange mit aktinischer Strahlung einer solchen Intensität bestrahlt, daß eine feste, harte, zähe, korrosionsbeständige Schicht gebildet wird.

12. Verfahren nach Anspruch 11, **dadurch gekennzeichnet, daß** die Beschichtungsmischung zu einer Schichtdicke von 2 bis 8 µm, vorzugsweise 3 bis 7 µm, aufgebracht wird.

13. Verfahren nach Anspruch 11 oder 12, **dadurch gekennzeichnet, daß** die zu beschichtende Unterlage ein Stahlblech ist, das zuvor verzinkt und bzw. oder chromatiert bzw. chromatfrei vorbehandelt worden ist.

14. Verfahren nach einem der Ansprüche 11 bis 13, **dadurch gekennzeichnet, daß** die Beschichtung und Härtung in einem Arbeitsgang nacheinander kontinuierlich erfolgen und die durch Strahlung gehärtete Schicht gegebenenfalls thermisch nächgehärtet wird.

15. Flexibles Metallblech, das elektrolytisch verzinkt oder feuerverzinkt und bzw. oder chromatiert bzw. chromatfrei vorbehandelt ist und eine darauf angebrachte organische Schicht aufweist, die erhältlich ist nach dem Verfahren gemäß einem der Ansprüche 11 bis 14.

## Claims

1. Coating mixture having corrosion protection properties, comprising a solid polymeric organic binder, a low molecular weight liquid radically polymerisable compound, a compound which under the influence of actinic radiation forms radicals, and a conductive inorganic pigment from the group consisting of oxides, phosphates and phosphides of iron and aluminium and graphite-mica pigments.

2. Mixture according to Claim 1, **characterised in that** the conductive inorganic pigment is iron phosphide or a combination of magnetisable iron oxide with iron phosphide.

3. Mixture according to Claim 1 or 2, **characterised in that** the binder is present in a proportion of from 15 to 60, preferably 20 to 50, in particular 20 to 40 wt.%,
the polymerisable compound is present in a proportion of from 24 to 60, preferably 20 to 55, in particular 25 to 50 wt.%,
the pigment is present in a proportion of from 10 to 40, preferably 10 to 35, in particular 12 to 35 wt.%, and the photoinitiator is present in a proportion of from 5 to 30, preferably 8 to 25, in particular 8 to 20 wt.%, as well as
further additives being present in a proportion of from 0.1 to 5, preferably 0.3 to 4, particularly preferably 0.4 to 3 wt.%.

4. Mixture according to one of Claims 1 to 3, **characterised in that** it is free from organic solvents and water.

5. Mixture according to one of Claims 1 to 4, **characterised in that** the binder itself also comprises unsaturated polymerisable groups.

6. Mixture according to one of Claims 1 to 5, **characterised in that** the binder is selected from the group consisting of condensation resins, epoxy resins, poly(meth)acrylates, polyurethanes, polyesters and polyethers, preferably epoxidised novolaks, bisphenol-epichlorohydrin condensation products and esterification products of these resins or polymers with (meth)acrylic acid.

7. Mixture according to one of Claims 1 to 6, **characterised in that** the radically polymerisable compound is a mixture of compounds whereof at least a proportion comprises more than one polymerisable group in the molecule or consists entirely of the latter.

8. Mixture according to Claim 7, **characterised in that** the radically polymerisable compound is an ester of an α-, β-unsaturated carboxylic acid, preferably acrylic or methacrylic acid with a dihydric or polyhydric monomeric or oligomeric alcohol.

9. Mixture according to Claim 8, **characterised in that** the radically polymerisable compound is selected from the group consisting of dipropylene glycol di(meth)acrylate and tripropylene glycol di(meth)acrylate, 2-acetoacetyloxyethyl methacrylate, hexanediol diacrylate, hydroxypropyl methacrylate, hydroxyethyl methacrylate and trimethylolpropane triacrylate.

10. Mixture according to one of Claims 1 to 9, **characterised in that** the compound which when irradiated forms radicals is an aromatic keto compound.

11. Process for the application to a metallic substrate of a corrosion protection layer having good surface slip, **characterised in that** a mixture according to one of Claims 1 to 10 is applied to the surface of a metallic substrate and the coating applied is irradiated for such a duration with actinic radiation of such an intensity that a solid, hard, tough, corrosion-resistant layer is formed.

12. Process according to Claim 11, **characterised in that** the coating mixture is applied to a layer thickness of from 2 to 8 µm, preferably 3 to 7 µm.

13. Process according to Claim 11 or 12, **characterised in that** the substrate to be coated is a sheet steel which has previously been galvanised and/or chromated or pre-treated in chromate-free manner.

14. Process according to one of Claims 11 to 13, **characterised in that** the coating and curing take place sequentially in continuous manner in one working cycle, and the radiation-cured layer is optionally thermally post-cured.

15. Flexible sheet metal which is galvanised or hot-galvanised and/or chromated or pre-treated in chromate-free manner and to which an organic layer has been applied which is obtainable by the process according to one of Claims 11 to 14.

## Revendications

1. Mélange pour revêtement à propriétés anti-corrosion, contenant un liant polymère organique solide, un composé à bas poids moléculaire, liquide et polymérisable par voie radicalaire, un composé engendrant des radicaux sous l'effet d'un rayonnement actinique, et un pigment inorganique conducteur, choisi dans l'ensemble constitué par les oxydes, phosphates et phosphures de fer ou d'aluminium et les pigments à base de graphite-mica.

2. Mélange conforme à la revendication 1, **caractérisé en ce que** le pigment inorganique conducteur est du phosphure de fer ou une combinaison de phosphure de fer et d'oxyde de fer magnétisable.

3. Mélange conforme à la revendication 1 ou 2, **caractérisé en ce qu'**il contient de 15 à 60 %, de préférence de 20 à 50 % et en particulier de 20 à 40 % en poids de liant, de 24 à 60 %, de préférence de 20 à 55 % et en particulier de 25 à 50 % en poids de composé polymérisable, de 10 à 40 %, de préférence de 10 à 35 % et en particulier de 12 à 35 % en poids de pigment, et de 5 à 30 %, de préférence de 8 à 25 % et en particulier de 8 à 20 % en poids de photoamorceur, ainsi que de 0,1 à 5 %, de préférence de 0,3 à 4 % et en particulier de 0,4 à 3 % en poids d'autres adjuvants.

4. Mélange conforme à l'une des revendications 1 à 3, **caractérisé en ce qu'**il ne contient ni solvants organiques, ni eau.

5. Mélange conforme à l'une des revendications 1 à 4, **caractérisé en ce que** le liant lui-même contient encore des groupes insaturés polymérisables.

6. Mélange conforme à l'une des revendications 1 à 5, **caractérisé en ce que** le liant est choisi dans l'ensemble constitué par les résines de polycondensation, résines époxydes, polyacrylates, polyméthacrylates, polyuréthanes, polyesters et polyéthers, et de préférence parmi les résines novolaques époxydées, les produits de condensation de bisphénol et d'épichlorhydrine, et les produits d'estérification de ces résines ou polymères avec de l'acide acrylique ou méthacrylique.

7. Mélange conforme à l'une des revendications 1 à 6, **caractérisé en ce que** le composé polymérisable par voie radicalaire est un mélange de composés d'entre lesquels au moins certains contiennent plus d'un groupe polymérisable par molécule, ou un mélange entièrement constitué de tels composés.

8. Mélange conforme à la revendication 7, **caractérisé en ce que** le composé polymérisable par voie radicalaire est un ester d'un acide carboxylique α,β-insaturé, qui est de préférence de l'acide acrylique ou méthacrylique, et d'un diol ou polyol monomère ou oligomère.

9. Mélange conforme à la revendication 8, **caractérisé en ce que** le composé polymérisable par voie radicalaire est choisi dans l'ensemble constitué par les diacrylates et diméthacrylates de dipropylèneglycol ou de tripropylèneglycol, le méthacrylate de 2-acétoacétyloxyéthyle, le diacrylate d'hexanediol, le méthacrylate d'hydroxypropyle, le méthacrylate d'hydroxyéthyle et le triacrylate de triméthylolpropane.

10. Mélange conforme à l'une des revendications 1 à 9, **caractérisé en ce que** le composé engendrant des radicaux sous irradiation est un composé aromatique cétonique.

11. Procédé permettant d'appliquer sur un substrat métallique une couche brillante de revêtement anti-corrosion, **caractérisé en ce qu'**on étale un mélange, conforme à l'une des revendications 1 à 10, sur la surface d'un substrat métallique et qu'on expose le revêtement ainsi formé, pendant suffisamment longtemps, à un rayonnement actinique suffisamment intense pour qu'il se forme une couche solide, dure, tenace et résistante à la corrosion.

12. Procédé conforme à la revendication 11, **caractérisé en ce qu'**on étale le mélange de revêtement en une couche épaisse de 2 à 8 µm, et de préférence de 3 à 7 µm.

13. Procédé conforme à la revendication 11 ou 12, **caractérisé en ce que** le substrat à revêtir est une tôle d'acier qui a subi au préalable un traitement de galvanisation et un traitement de chromatation ou un traitement sans chromate.

14. Procédé conforme à l'une des revendications 11 à 13, **caractérisé en ce qu'**on effectue en continu, l'une après l'autre en un seul stade opératoire, les opérations de revêtement et de durcissement, et **en ce qu'**on fait éventuellement durcir encore, par traitement thermique, la couche déjà durcie par exposition à un rayonnement.

15. Tôle métallique flexible, qui a subi un traitement de galvanisation par électrolyse ou à chaud et respectivement ou un traitement de chromatation ou un trai-tement sans chromate et sur laquelle est déposée une couche organique, et qu'on peut obtenir en opérant selon un procédé conforme à l'une des reven-dications 11 à 14.
